# EUROPEAN PATENT SPECIFICATION

(11) **EP 1 607 739 B1**
(45) Date of publication and mention of the grant of the patent: **03.07.2013**
(21) Application number: 04405379.1
(22) Date of filing: 18.06.2004
(51) Int. Cl.: G01N 27/22

(54) **Capacitive sensor**
Kapazitiver Sensor
Capteur capacitif

(43) Date of publication of application: 21.12.2005
(60) Divisional application: 10012517.8
(73) Proprietor: Sensirion AG, 8712 Stäfa (CH)
(72) Inventor: Kummer, Adrian M., 8073 Zürich (CH); Hierlemann, Andreas R., 8049 Zürich (CH)
(74) Representative: Toleti, Martin

(56) References cited:
- EP-A- 0 911 628
- GB-A- 2 256 489
- US-A- 4 854 725
- US-B1- 6 249 130
- SHEIRETOV Y ET AL: "DIELECTROMETRY MEASUREMENTS OF SPATIAL MOISTURE PROFILES IN OIL-IMPREGNATED PRESSBOARD" PROCEEDINGS OF THE INTERNATIONAL CONFERENCE ON PROPERTIES AND APPLICATIONS OF DIELECTRIC MATERIALS, XX, XX, 3 July 1994 (1994-07-03), pages 701-704, XP000749804
- KUMMER A M ET AL: "TUNING SENSITIVITY AND SELECTIVE OF COMPLEMENTARY METAL OXIDE SEMICONDUCTOR-BASED CAPACITIVE CHEMICAL MICROSENSORS" ANALYTICAL CHEMISTRY, AMERICAN CHEMICAL SOCIETY. COLUMBUS, US, vol. 76, no. 9, 1 May 2004 (2004-05-01), pages 2470-2477, XP001196745 ISSN: 0003-2700
- VAN GERWEN P ET AL: "Nanoscaled interdigitated electrode arrays for biochemical sensors" 1997 INTERNATIONAL CONFERENCE ON SOLID-STATE SENSORS AND ACTUATORS. DIGEST OF TECHNICAL PAPERS. TRANSDUCERS 97. CHICAGO, IL, JUNE 16 - 19, 1997. SESSIONS 3A1 - 4D3. PAPERS NO. 3A1.01 - 4D3.14P, INTERNATIONAL CONFERENCE ON SOLID-STATE SENSORS AND ACTU, vol. VOL. 2, 16 June 1997 (1997-06-16), pages 907-910, XP010240622 ISBN: 0-7803-3829-4

## Description

### Field of the Invention

This invention concerns a novel design for capacitive sensors based on configurable electrodes. It allows to significantly reduce costs and, at the same time, efficiently improves signal quality by drastically reducing detrimental influences, such as sensor drift and the influence of interferants, such as humidity or temperature. The novel design results in much more stable sensor signals. Also, the cost of a sensor system is drastically reduced. First, the number of sensors required for acquiring a specific amount of information is reduced. Separate reference capacitors or other reference circuits are no more needed. Secondly, if one or several of the novel sensors are integrated on a microchip, the chip size can be drastically reduced, as less sensors and associated circuitry are required on the chip for obtaining the same or better results.

### Background and Prior Art

A chemical sensor is a device that transforms chemical information, such as a concentration of a specific substance (analyte), into an analytically useful signal, often an electric signal. The analyte is usually measured using a sensitive material which changes its physical properties upon interaction with said analyte. A transducer is used to measure the changes in the physical properties of the sensitive material, which properties are correlated to the analyte concentration.

Today, chemical sensors are often miniaturized and integrated to achieve low cost production. Commercial CMOS (Complementary Metal Oxide Semiconductor) technology offers reliable batch fabrication at ever-decreasing feature sizes and enables low cost production of transducers including integrated circuitry. Integration of the read-out and driving circuitry on the sensor chip not only reduces the number of external devices that are needed to operate the sensor, but also allows processing the sensor signals at the source, thus decreasing degradation of the signal quality. Microsensors relying on different transducing principles along with associated circuitry have been implemented in CMOS technology, as described e.g. by Y. Y. Qiu, C. Azeredo-Leme, L. R. Alcacer, and J. E. Franca in "A CMOS humidity sensor with on-chip calibration" Sensors and Actuators A-Physical, 92 (2001) 80-87.

Capacitive CMOS microsensors with sensitive material coatings are promising devices for chemical sensing as no micromachined parts such as membranes are needed, which renders the chip more rugged and reduces the number of post processing steps and, hence, costs.

It is often necessary or of interest to measure or control the temperature of the sensor. Therefore, capacitive sensors have also been integrated on micromachined membranes with heaters and temperature sensors, as described by A. Koll in "CMOS Capacitive Chemical Microsystem for Volatile Organic Compounds", Ph.D. thesis No 13460, ETH Zürich, Zürich (1999). Also, temperature-controlled sensors in CMOS technology have been implemented with the respective control circuitry for a broad temperature range, e.g., for metal-oxide-semiconductor sensors.

The present invention relates to capacitive sensors. They are characterized by the fact that the transducer is a capacitor, often covered with a sensitive layer. The capacitance is affected by changes in the dielectric properties and, possibly, in the volume of the material on top of the electrodes, e.g. a sensing layer upon exposure to an analyte.

Sensitive layers often consist of polymers, as described by H. E. Endres and S. Drost in "Optimization of the Geometry of Gas-sensitive Interdigital Capacitors", Sensors and Actuators B-Chemical, 4 (1991) 95-98. But metal oxides, molecular sieves, or liquid crystals may also be used. Alternatively, instead of using any sensitive material, the respective physical change in the sample phase may be monitored.

Capacitances are usually measured at an AC frequency of a few kHz up to a few MHz. An advantage of capacitive sensors is the low power consumption during operation, enabling their usage in hand-held devices.

Initial applications areas of chemocapacitors include humidity sensing using polyimide films, since water has a high dielectric constant of 76.6 (in liquid state, at 303 K) leading to large capacitance changes. Capacitive humidity sensors are commercially available from Sensirion, Vaisala, Humirel, and others. Also, Geist US patent 5 767 687 and US patent publication 2003 094045 refer to humidity sensors, for example.

More recent applications include the detection of organic volatiles in the gas or liquid phase.

Combinations of capacitive sensors with other sensing principles are also possible and implemented. A monolithic CMOS chip comprising a capacitive, a mass-sensitive cantilever, and a calorimetric sensor combined with electronic circuitry is reported by C. Hagleitner, A. Hierlemann, D. Lange, A. Kummer, N. Kerness, et al. in "Smart single-chip gas sensor microsystem", Nature, 414 (2001), 293-296.

The capacitors of such capacitive sensors are predominantly designed as interdigitated structures. Such interdigitated structures are favored because the electrode configuration is planar, and the sample or analyte has free access to the sensitive region of the sensor device. It also results in a short response time of the device.

Patents for specific applications of such sensors include end-of-life-time detectors of gas filters, see US patent 5 512 882 and US patent 4 926 156 for specific sensitive layers, or Geist US patent 5767687, mentioned above, for humidity sensors. Other patents refer to the usage in the liquid phase, e.g. analytes, such as hydrocarbons, are detected in a liquid medium via a capacitance decrease caused by displaced water molecules due to bubble formation at the surface of the sensitive layer as described in US patent 4 728 882. An ion exchange layer to detect analyte ions is disclosed in US patent 4 935 207, whereas US patent 4 822 566 describes a biosensor which relies on a biospecific binding between a biochemical binding system and an analyte in an aqueous fluid.

Since the changes in the sensor capacitance upon analyte absorption are small in comparison to the absolute capacitance of the sensor, a differential measurement, between a sensor capacitor with a sensitive layer and a reference capacitor without such a layer, is preferable.

For capacitive sensors, mainly the changes in two physical properties are relevant for the resulting change in capacitance; these two properties being the dielectric constant and the probed volume. The presence of two relevant physical effects allows the use of an additional mechanism for sensor selectivity. A thin probed sample volume or sensitive layer invokes a different sensitivity pattern than a thick probed sample volume or sensitive layer. The reason is that the effect of the layer's thickness is correlated to the distribution of the electric field originating from the electrodes of an interdigitated capacitor. This can be understood with the following exemplary consideration, referring to an interdigitated capacitor used as chemical sensor in the gas phase.

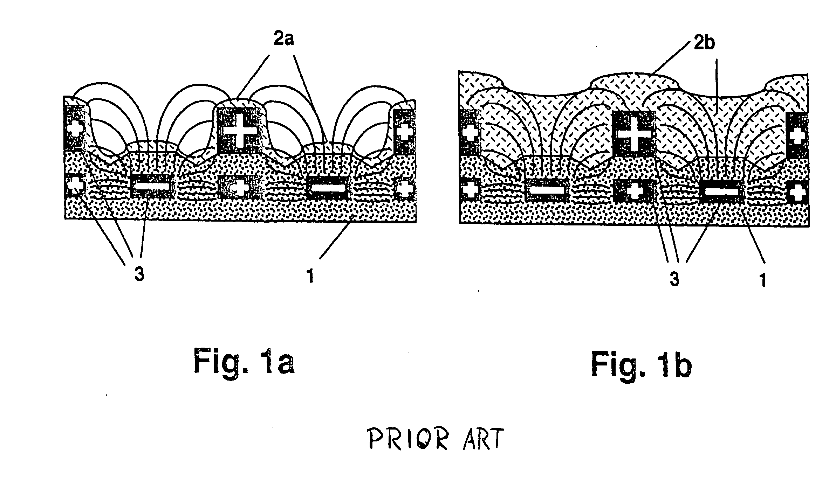

For a simple interdigitated structure, the space above the sensor device within a distance of approximately half of the electrode periodicity contains about 95% of the electric field lines. A "thin" layer or "thick" layer, i.e. probed sample volume or sensitive layer, is defined with respect to the extension of the electric field and, therefore, with respect to the electrode periodicity, as shown in Figs. 1a and 1b. For a layer thickness significantly less than half the periodicity as shown in Fig. 1a, the region of the strong electric field extends above the sensitive layer. Upon analyte interaction, the amount of polarizable material in the sensed region of the capacitor always increases, which results in a capacitance increase regardless of the dielectric constant of the analyte.

For a layer thickness greater than half the periodicity of the electrodes as depicted in Fig. 1b, almost all electric field lines are within the sensitive volume. Consequently, the capacitance is determined by the composite dielectric constant of the mixture between sensitive material and analyte. The capacitance change can therefore be positive or negative, depending on whether the composite dielectric constant increases or decreases, which is generally determined by whether the analyte or the material has the higher dielectric constant.

In summary, using the same type of sensor capacitor and the same sensitive material, two different independent measurements can be performed. However, this cannot be done with the same sensor at the moment. Two different sensors are required, coated with sensitive layers of different thicknesses.

Such an arrangement has already been successfully used in the case of capacitive gas sensors. With a differential measurement between a sensor with a thick sensitive layer and a sensor with a thinner sensitive layer, the cross-sensitivity to humidity and the sensor drift have been reduced by an order of magnitude, as shown by A. Kummer, A. Hierlemann, and H. Baltes in "Tuning Sensitivity and Selectivity of Complementary Metal Oxide Semiconductor-based Capacitive Chemical Microsensors", Analytical Chemistry, vol. 76, (2004), 2470-2477. This paper discloses a device in which one sensor is connected as sensor capacitor and another as pseudo-reference capacitor to the delta-sigma modulator of a read-out circuit.

European patent application EP 0 911 628 describes a capacitive-type sensor for measuring the water content in the ground and discloses an embodiment with three sets of comb-like, interdigitated electrodes which may be switched such that always two sets are connected in parallel, leading to different forms and depths of the generated electrical fields. The electrodes are, as usual, arranged in the same plane and there is no coating of any kind provided, in particular no coating which is sensitive to any material to be analysed.

A paper by Y. Sheiretov and M. Zahn, "Dielectrometry measurements of spatial moisture profiles in oil-impregnated pressboard", published in Proceedings of the 4th International Conference on Properties and Applications of Dielectric Materials, July 3-8, Brisbane, Australia, discloses another approach to generate different forms of the electrical field by a humidity sensor. The device shown therein comprises, on a common substrate, three separate groups of electrodes of differing physical structure, each group consisting of two sets of interdigitated sets of electrodes.

### Summary of the Invention

The invention is based on the idea that,
(1) by providing a variable electrode configuration, i.e. different electrical connections of different electrode subunits or groups, and
(2) by varying the connections to the read-out circuitry, the electric field, i.e. the distribution of the field lines, may be modified, resulting in a variation of the sensor capacitor and thus the sensor itself.

Thus, the same sensor, in different configurations, may be used for different purposes, e.g. providing the performance of two or more independent measurements with the same single sensor. Naturally, this reduces the number of sensors required for a particular detection task.

The signal quality of such a sensor may be improved by performing a differential measurement in which two electrode configurations can be read out simultaneously. By modifying the effective sensitive volume of the individual configurations, the differential measurement can be tuned so that sensor drift or other unwanted effects influencing the sensor response are strongly reduced. A differential measurement relying on two sensor signals of the same sensor but at different electrode configurations effectively reduces sensor drift and, especially in the case of gas sensors, humidity influence. As will be understood by a person skilled in the art, the reduction of drift and other undesired influences is very effective since the reference capacitor used for the differential measurement is exactly the same device - the same capacitor and the same sensitive layer - as the sensor capacitor, only the electrode configurations differ.

In other words, the principle works very efficiently because the identical sensor is used both as "sensor" and as "reference", which assures a perfect matching, i.e. any variations in the sensor structure or its sensitive coating or ambient conditions are cancelled out.

The basic principle of the invention shall be explained for a simple interdigitated capacitor, covered with a layer of a sensitive material. The thickness of the sensitive layer is measured relative to the extension of the electric field lines of the capacitor. For an interdigitated structure, the space above the device containing 95% of the field lines is within a distance of approximately half of the electrode periodicity, as described by P. Van Gerwen, W. Laureys, G. Huyberechts, M. Op De Breeck, K. Baert, J. Suls, A. Varlan, W. Sansen, L. Hermans, R. Mertens in "Nanoscaled interdigitated electrode arrays for biochemical sensors", Proc. of Transducers '97, 2, 907-910.

Therefore, a thin or thick layer is defined with respect to the electrode periodicity. For capacitors in general, i.e. not only interdigitated structures, the electrodes may be arranged arbitrarily. If the electrode arrangement is irregular, there is no periodicity in the structure. However, this will not cause the argumentation following further down to fail. The electrode spacing can be used equivalently to the electrode periodicity as measure for the extension of the electric field lines.

### Brief Description of the Drawings

In the following, various examples and modifications for carrying out the invention shall be explained together with the drawings. These show in
Figs. 1 a and 1 b two sensors with sensitive layers of different thicknesses;
Figs. 2a to 2c the effect of a varied electrode periodicity (not claimed);
Figs. 3a and 3b the effect of a varied electrode connection scheme;
Figs. 4a and 4b schematics of two electrode designs implementing the different electrode connection schemes shown in Figs. 3a and 3b;
Figs. 5a to 5c an electrical switching scheme for the electrodes shown in Figs. 4a and 4b;
Fig. 6 a output signal diagram of a poly(etherurethane)-(PEUT)-coated sensor according to Fig. 3a or 3b exposed to different concentrations of n-octane and different humidities;
Fig. 7 another electrode layout featuring high flexibility for a sensor according to the invention;
Figs. 8a and 8b a further example for implementing the invention;
Fig. 9 an irregular electrode layout embodying the invention (not claimed);
Figs. 10a and 10b an example for varying the extension of the electric field lines by switching the electrical connection of the electrodes (not claimed);
Figs. 11a and 11b (not claimed) an application example similar to the example shown in Figs. 10a and 10b;
Fig. 12 an application example similar to Figs. 11a and 11b with a multi-layer electrode structure (not claimed).

### Detailed Description of the Drawings

The two Figs. 1a and 1b show the surfaces of two sensor substrates 1 each covered with a sensitive layer 2a and 2b, respectively. The desired selectivity of the sensor is achieved by varying the thickness of the sensitive layer. Fig. 1a shows a thin layer 2a, perhaps not even contiguous, whereby the electric field lines extend to a large part outside the sensitive layer 2a. Fig. 1b on the other hand shows a thick layer 2b whereby the field lines, as shown, extend essentially inside of this sensitive layer 2b. It should be understood that the terms "thick" or "thin" are here defined relative to the extension of the electric field lines. The "thin" sensor of Fig. 1 a obviously shows a different characteristic compared to the "thick" sensor of Fig. 1b, but the two sensors are so-to-speak interrelated and in some way limited by the physical thickness or volume of the respective sensitive layer 2a or 2b.

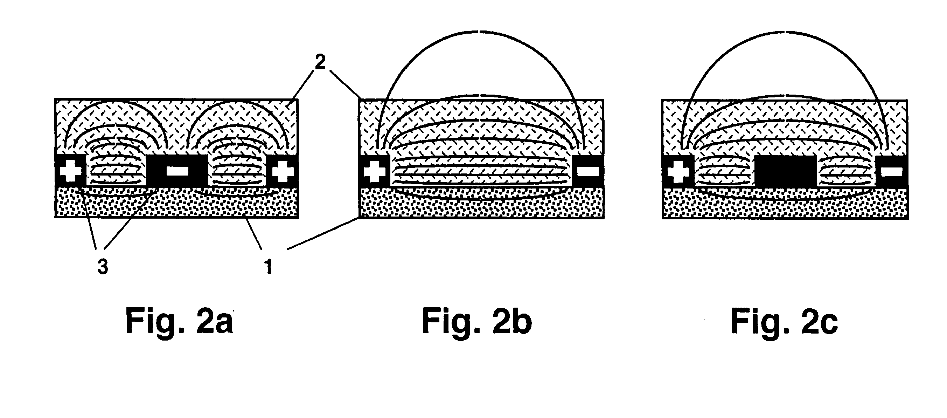

Now, overcoming this limitation, the electrode periodicity or spacing may be varied instead of modifying the thickness of the sensitive layer. Figs. 2a and 2b (not claimed), respectively, show polymer (or other sensitive) layers 2 of the same absolute thickness on interdigitated capacitive sensor electrodes 3 having different effective spacings so that one of these layers is effectively thick (Fig. 2a) and the other effectively thin (Fig. 2b). Yet, for mechanically fixed electrodes, there are still two sensors with different electrode spacing required for the two measurements, clearly visible when comparing Fig. 2a with Fig. 2b.

Even this limitation is overcome by changing the electrode periodicity and/or spacing of a defined, fixed electrode pattern by varying the electrical connections of the different electrode sets. An example is given in Fig. 2c (not claimed) for an interdigitated capacitor, the electrode sets of which are the finger sets of the interdigitated arrangement. By changing the electrical connection of the structure shown in Fig. 2a, e.g. by switching the center electrode off, the effective electrode periodicity and/or spacing, i.e. the distances between those electrodes used to measure the capacitance, is varied. Consequently, the extension of the electric field (or flux) lines varies and, therefore, the effective thickness of the sensitive layer is modified as well. Thus, two measurements with an single (identical) sensor, but with two different electrode connections, may now provide the information of two sensors.

The basic principle is to change the effective sensitive volume, here the effective sensitive layer thickness, by variation of the electrode periodicity. The actual physical thickness of the sensitive layer remains untouched, as is clearly indicated in the three figures.

Fig. 2a shows a scheme of the electrodes 3 with a small periodicity, i.e. the electrodes are relatively narrowly spaced. This results in an electric field distribution completely within the sensitive layer 2. This in turn is equivalent to a thick sensitive layer 2 for the given electrode spacing.

Fig. 2b in contrast shows an electrode scheme with a large periodicity, i.e. the electrodes are more widely spaced. This results in an electric field distribution also outside the sensitive layer 2. This in turn is equivalent to a thin sensitive layer 2 for the given electrode spacing. But the structure of Fig. 2b still differs physically from the structure of Fig. 2a: it has a different electrode pattern.

Fig. 2c then shows a possibility to achieve the effect of a thin, sensitive layer 2 with the structure according to Fig. 2a. This is obtained by varying the distribution of the electrical field which is effected by varying the electrical connection and/or polarity of the existing electrodes. It is obvious that by letting the center electrode float and connecting the outside electrodes as shown, a similar field distribution as shown in Fig. 2b can be achieved - but without any physical changes of the sensor.

In brief, the basic functional principle may be summarized as follows:

For a sensitive layer of defined thickness:
(a) Small electrode periodicity leads to an effectively thick sensitive layer.
(b) Large periodicity causes an effectively thin layer.
(c) Alternative electrical connection of electrodes can be used to achieve a situation similar to that shown in (b) with an effectively large periodicity, resulting in an effectively thin layer.

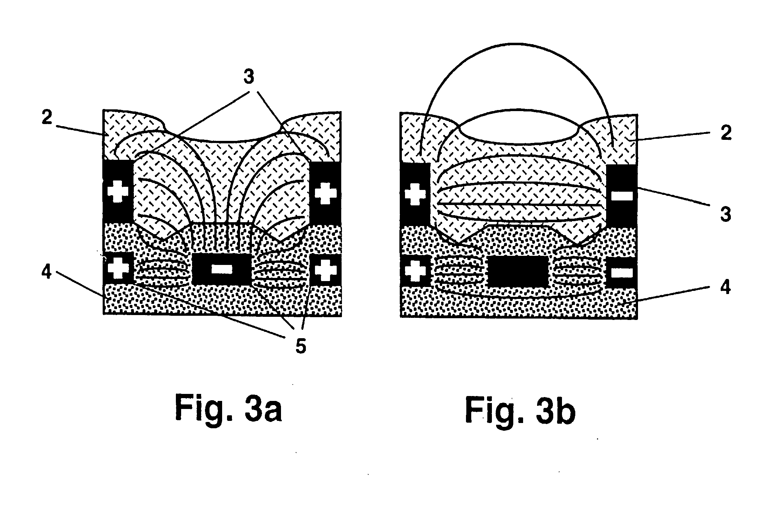

Figs. 3a and 3b illustrate a sensor design with "stacked" electrodes, wherein a first group or layer of electrodes 3 is arranged at a first, upper plane in a sensitive layer 2 and a second group or layer of electrodes 5 is arranged at a second, lower plane an intermetal oxide 4. The cross section of one repeating unit of an electrode structure is displayed with two configurations, a "normal" configuration in Fig. 3a and "alternative" one in Fig. 3b, with the corresponding field lines shown. In the normal configuration of Fig. 3a, the central electrode of the lower group has a negative potential, whereas the electrodes of the upper group and those of the lower group underneath the upper group electrodes have a positive potential. The resulting field lines are illustrated in Fig. 3a. In the alternative configuration shown in Fig. 3b, the leftmost electrodes of both groups are kept at the same potential, whereas the rightmost electrodes are switched the negative potential. The center electrode of the lower group is floating and thus has a negligible effect on the electric field shown in Fig. 3b. Obviously, this electrode layout pattern may be repeated, resulting in a interdigitated stacked electrode arrangement of any length.

Again, the effective thickness of the sensitive layer is changed by varying the electrical connections of the stacked electrodes. Whereas Fig. 3a shows an electrode connection scheme resulting in a small electrical field extension, i.e. a relatively thick sensitive layer, shows Fig. 3b in contrast, somewhat similar to Fig. 2c, a large electrical field extension, resulting in a relatively thin sensitive layer.

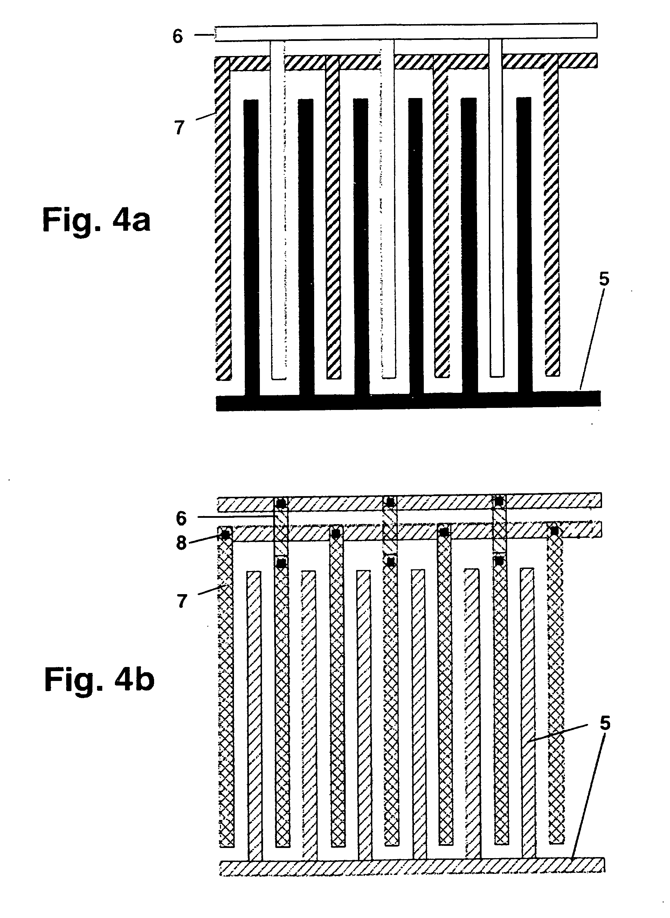

Figs. 4a and 4b show a top view of a potential interdigitated design according to Figs. 3a and 3b with stacked metal layers, comprising a first electrode group or pattern 5 and a second electrode group or pattern 7 of a metal A in one plane and a superimposed electrode group or pattern 6 of a metal B in a second plane above said first plane. The latter is shown in white in Fig. 4a. Electrically connected electrodes shown in the same hatching or color, i.e. all electrodes are separated from each other in Fig. 4a, which is the first configuration.

Fig. 4b depicts schematically the second configuration in which the two superimposed electrode patterns 6 and 7 are connected by vias 8, forming a first electrode, whereas electrode pattern 5 forms the second electrode of the senosr's capacitor. This is an example for a possible layout using a double-metal CMOS process.

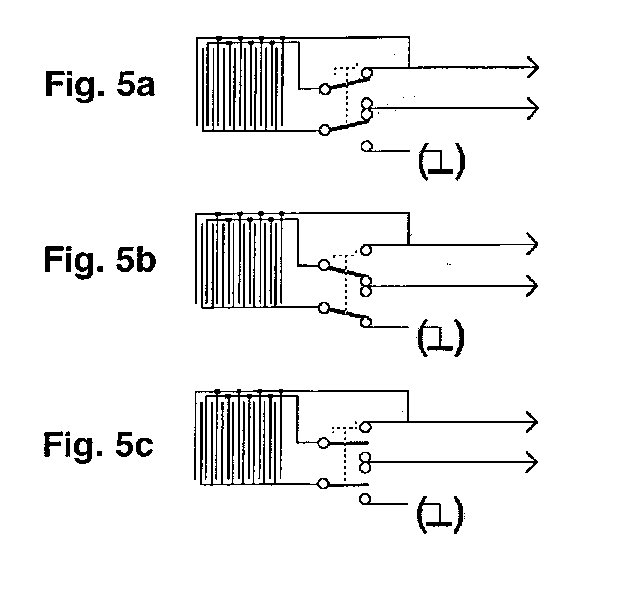

Figs. 5a to 5c illustrate an electrical switching scheme for electrodes, e.g. for an electrode arrangement as shown in Fig. 4b, with the switches in different positions. Three sets of interdigitated electrodes are provided. The switch position for a first, "normal", electrical connection scheme is shown in Fig. 5a. Here, the electrodes generate small-extension electrical field lines similar to the field shown in Fig. 3a, resulting in an effectively thick sensor layer. The alternative switch position shown in Fig. 5b results in a large-extension electrical field similar to the field shown in Fig. 3b, resulting in an effectively thick sensor layer. The third alternative is an "unconnected" position of the switches, whereby only one of the electrodes sets is connected.

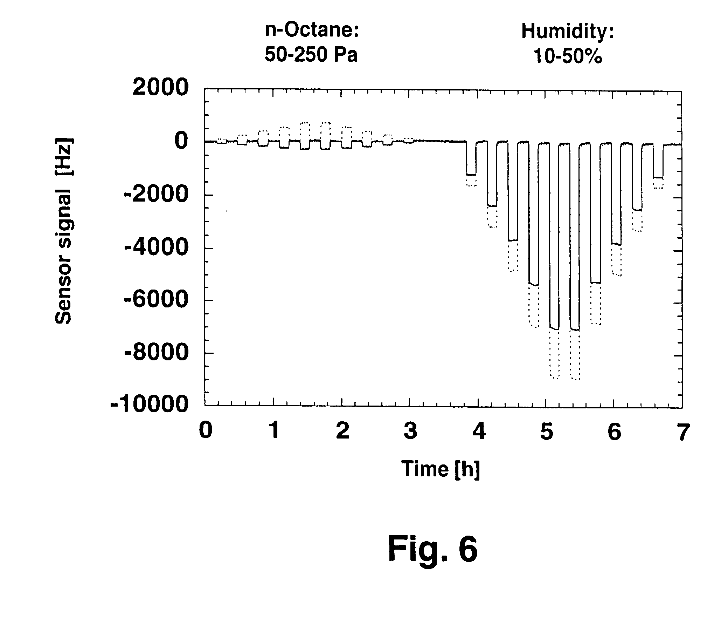

Fig. 6 illustrates the output signals of a poly-etherurethane-coated (PEUT-coated) sensor, essentially equivalent to the sensor shown in Figs. 3a/3b, exposed to different concentrations of n-octane (50 to 250 Pa) and different humidities (10 to 50% RH). The frequency shifts were measured for two different electrode configurations as a function of time. The solid lines represent the measurements using the normal configuration of Fig. 3a, whereas the dashed lines show the alternative configuration as depicted in Fig. 3b. Negative frequency shifts indicate a capacitance increase and positive shifts a decrease. In the normal configuration according to Fig. 3a, n-octane gives a capacitance increase and humidity a decrease, respectively, whereas in the alternative configuration according to Fig. 3b, both analytes give capacitance increases.

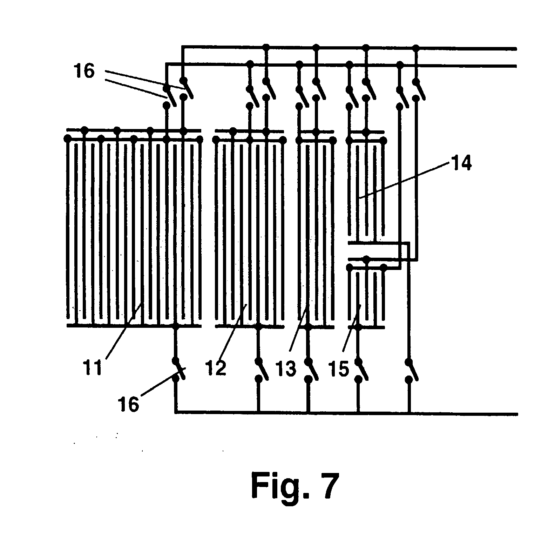

Fig. 7 shows another implementation of the invention. The effective sensor size may be varied by connecting or disconnecting sensor areas of different sizes. Each of the sensor areas 11 to 15 of decreasing size may be individually connected by switches 16 analogous to the design shown in Fig. 5. The scheme of the electrical connections and the layout of the electrodes should now be easily understood by someone skilled in art.

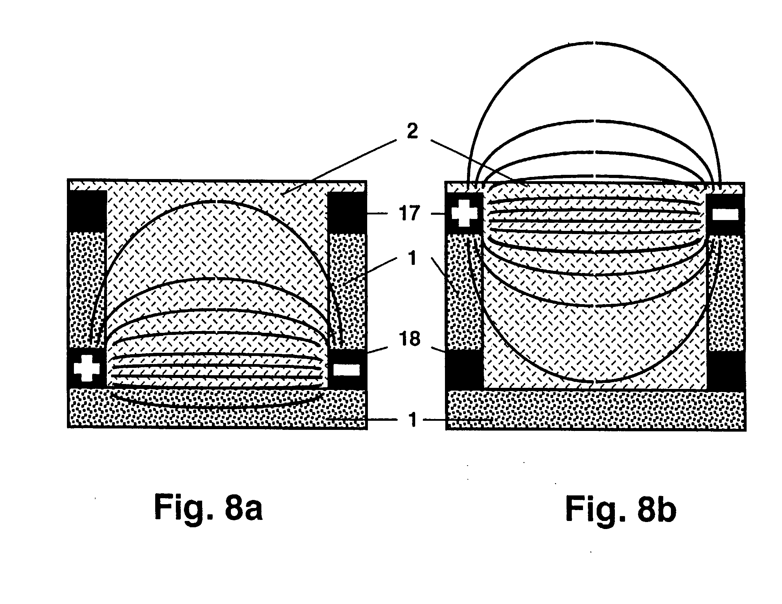

Figs. 8a and 8b illustrate another exemplary implementation of the invented principle of changing the effective thickness of a sensitive layer by switching the electrical connection of the electrodes. Here, the effective location of the electrodes is changed instead of the electrode periodicity or spacing as shown and described in connection with Figs. 2a and 2b or 3a and 3b. Fig. 8a depicts the configuration of the lower electrode group 18 being activated, whereby an effectively thick sensitive layer is generated since the majority of the field lines is located within the layer volume. In contrast, the electrical connection shown in Fig. 8b, with the upper electrode group 17 being activated, generates an effectively thin layer, i.e. the region with strong electric field lines extends above the sensitive layer.

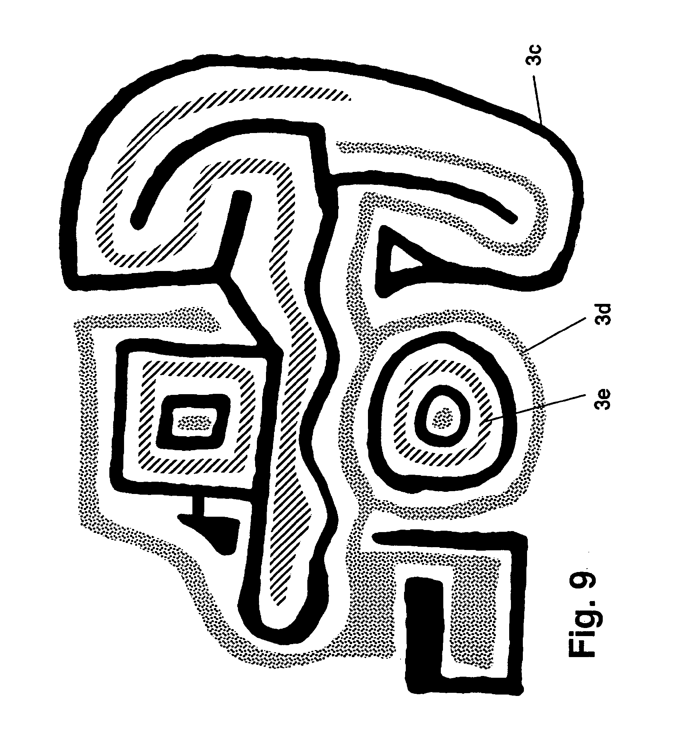

Fig. 9 (not claimed) shall indicate that the electrode arrangements do not have to be designed in a regular way such as the interdigitated structures described above. The principle can as well be realized with arbitrary shapes, one of which is displayed in Fig. 9 as exemplary example. In a normal configuration, the black electrodes 3c can be measured versus the dotted electrodes 3d and the dashed electrodes 3e combined. In an alternative configuration, the dotted electrodes 3d might be measured against only the dashed electrodes 3.

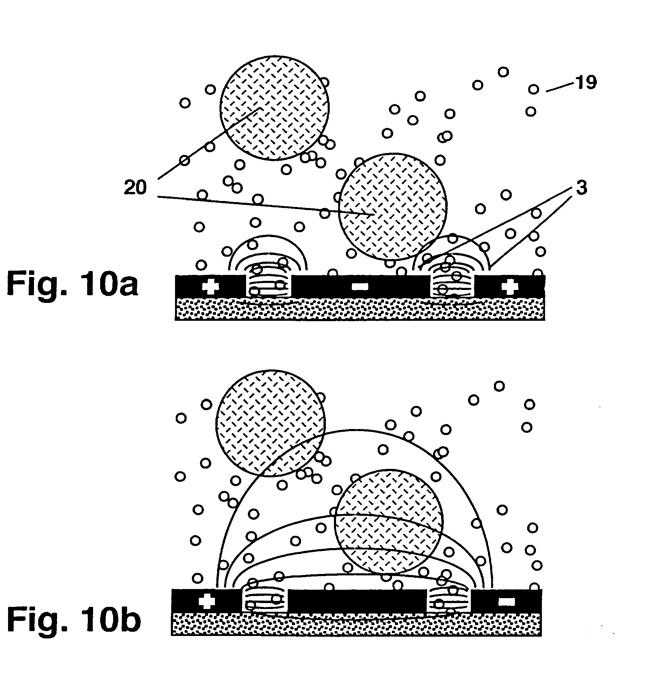

Figs. 10a and 10b (not claimed) illustrate a further example of applying the principle of changing the extension of the electric field lines by switching the electrical connection of the electrodes 3. Here, selectivity towards two analytes 19 and 20 of different sizes is achieved. Depending on the structural dimensions of the electrodes 3, analytes can be, e.g. chemical molecules, macromolecules, proteins, cells, or macroscopic particles. In the normal configuration shown in Fig. 10a, the extension of the electric field lines is small. Primarily small analytes 19 are located in the sensed region with strong electric fields and are thus preferentially detected.

In the alternative configuration shown in Fig. 10b, the extension of the field lines is large. Small and large analytes 19 and 20 are included in the region of strong electric fields and are detected at similar sensitivity. By performing the two measurements described and shown in Fig. 10a and 10b, it is possible to distinguish the contributions of small and large molecules or particles to the overall sensor signal.

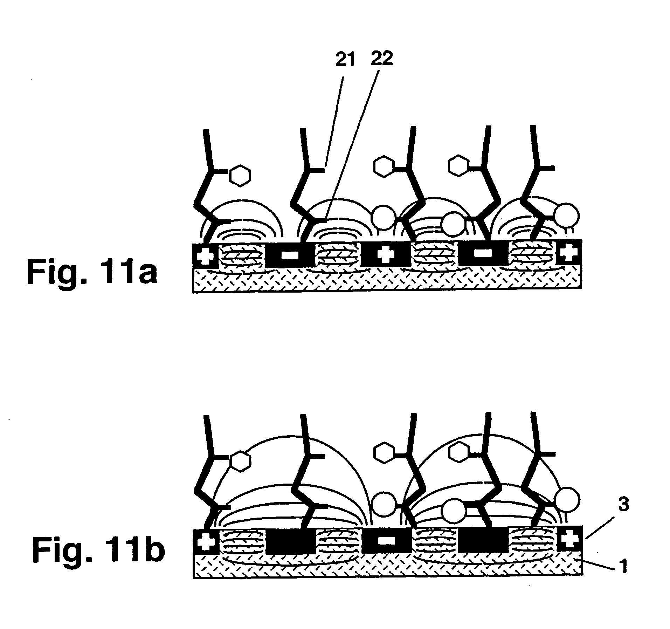

Figs. 11a and 11b (not claimed) illustrate a further exemplary application for changing the extension of the electric field lines by switching the electrical connection of the electrodes. In this embodiment, analytes are recognized by binding to specific receptors. Receptors 21 and 22 for different analytes are located in different distances to the surface of the sensor device consisting of electrodes 3 on a substrate 1. The sensed region of the capacitor depends on the electrical connection of the electrodes 3. In the normal configuration shown in Fig. 11a, only the analyte which binds to the receptors 22 closer to the surface are sensed. In the alternative connection shown in Fig. 11b, also the analytes bound to the more distant receptors 21 are measured.

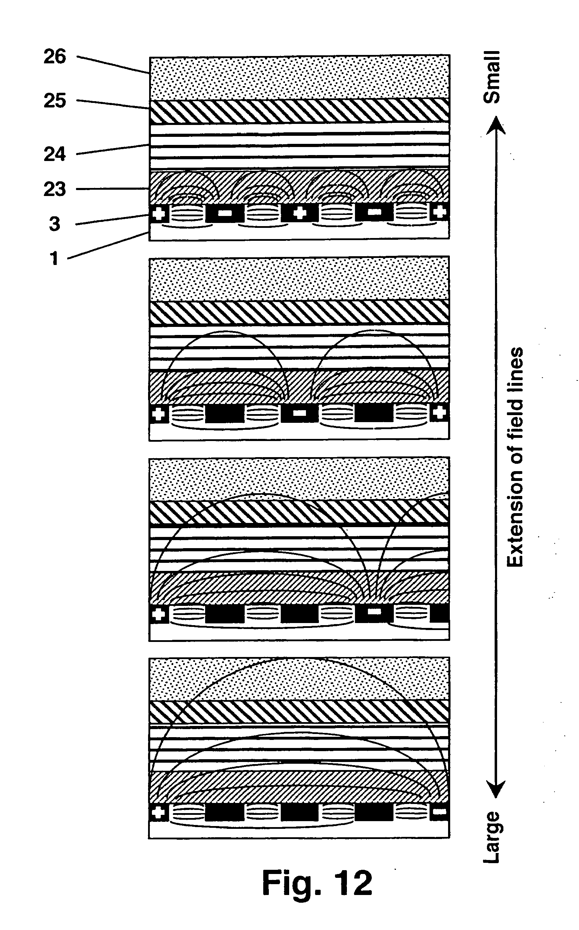

Fig. 12 (not claimed) finally depicts a still further exemplary application. Different sensor layers 23 to 26 (reference numerals are shown on the top structure only) are placed on an electrode/substrate base 3 and 1. Each sensor layer 23 to 26 can be analyzed - "addressed" - with a suitably extending electric field.

Starting from the uppermost electrode configuration downwards to the one at the bottom, the extension of the electric field lines increases so that more and more layers 23-26 come into the sensitive region of the sensor. A kind of depth profile of the different layers can be generated by systematically varying the electrode configuration. The signals produced by the layers located closer to the surface are always included in the signal upon the next electrical field extension step.

### Detailed Description of an Exemplary Embodiment

To realize the invention, the production in a standard semiconductor technology, such as a 0.8- mu m double poly-double metal-CMOS process, is proposed. This allows the integration of electronic switches implementing the different electric connections of the electrodes as well as the integration of read-out circuitry next to the sensor capacitor(s). If a sensor array is desirable, multiplexers can also be integrated.

This implementation is not limited in its dimensions. The electrode structure can also be implemented in much smaller dimensions, leading to correspondingly higher capacitances and sensitivities per capacitor area. On the other side, the capacitors could also be implemented in considerably larger dimensions if the response time of the device is of lesser concern.

Concerning the geometry of the electrodes, interdigitated electrodes are preferred. Arbitrary shapes are possible however, one of which is shown in Fig. 9.

Using interdigitated electrodes, a cross-section as shown in Figs. 3a and 3b is suggested. Possible dimensions are an electrode width and a spacing of 1.6 mu m with a total sensor size of 800 mu m x 800 mu m. The two connection configurations and the corresponding electric field lines are indicated in Figs. 3a or 3b, respectively.

In the alternative connection of Fig. 3b, the electrode spacing is larger and, hence, the capacitance has a tendency to smaller values. Whereas one electrode is only made of metal A of the CMOS process, cf. Fig. 4a, both electrodes are formed of a stack of metals A and B in the configuration of Fig. 4b, which can be interpreted as top view of the design shown in Figs. 3a and 3b. The electrode stacking may compensate for the increased electrode distance.

Other designs are possible, one of which is shown in Figs. 8a and 8b. There, the effective layer thickness is varied by the effective position of the electrodes and not by their periodicity or spacing.

A switching arrangement to connect the various sets of electrodes to the read-out circuitry are depicted in Figs 5a to 5c in different positions. The unused electrodes, cf. Fig. 3b, can be left floating or connected to a fixed potential, such as ground.

An exemplary measurement in the gas phase with a prototype designed as described above confirms that the principle works. In Fig. 6, the sensor signals of an interdigitated capacitor, coated with a layer of the polymer poly-(etherurethane) (PEUT) (epsilon = 4.8), upon exposure to concentration steps of n-octane ( epsilon = 1.95) and water ( epsilon APPROX 80) vapors in air are displayed as a function of the measurement time. The negative frequency shifts correspond to a capacitance increase, positive shifts indicate a decrease. In the normal configuration (dotted line), equivalent to the switch position of Fig. 5a, the polymer layer is effectively thick, and the responses are positive or negative, depending on the dielectric coefficients of the analyte and the sensitive layer. Using the alternative configuration (solid line), equivalent to the switch position of Fig. 5b, the layer is effectively thin which is reflected in capacitance increases for both analytes. The capacitance increase is due to the cooperative effects of swelling and replacing sorptive layer/analyte for air (low dielectric coefficient) within the field lines.

To perform an advanced differential measurement, the electrode configurations can be adapted so that undesired parameters, such as sensor drift or (especially for gas sensors) humidity influence, are cancelled out. This can be achieved, e.g. by varying the sensor size by connecting only a certain fraction or part of the sensor to the read-out circuitry. Fig. 7 shows a possible way to realize different capacitor sizes and to tune the effective sensor size this way.

For the read-out circuitry, a delta-sigma modulator, similar to that described by S. Kawahito, A. Koll, C. Hagleitner, H. Baltes, and Y. Tadokoro, "Delta-Sigma Modulation Sensor Interface Circuits with Improved Conversion Gain for Capacitive Readout Chemical Sensors", Trans IEE of Japan 119-E 3 (1999), 138 -142, is suitable owing to its high resolution. It can be modified to read out two (or more) electrode configurations quasi simultaneously, one of which being used as sensor and the other as reference capacitor.

If a temperature control of the sensor is desired, the capacitor will favorably be placed on a micromachined membrane with integrated temperature sensor and heater. Circuitry to accurately control the temperature can then be integrated on the CMOS chip as well.

To reduce signal degradation and the number of pins of the chip, a digital communication interface can be realized, as will be understood by a person skilled in the art.

### Further Applications

The use of any of the proposed structures is not restricted to capacitors covered with sensitive layers which interact with an analyte. Many other applications are conceivable, a few of which are outlined in the following.

Electrode arrangements with different electrical connections can also serve to generate sensor capacitors with different electrical field line structure. Field lines with, e.g., different extensions above the surface of the device allow the discrimination of entities in different distances to the device surface.

A possible application is the recognition of analytes of different sizes, as shown in Figs. 10a and 10b (not claimed). Depending on the dimensions of the electrode structures, analytes my be chemical molecules, macromolecules, proteins, cells, or macroscopic particles, etc. Whereas small analytes are distributed homogeneously everywhere, the effective concentration of large analytes is lower near the surface of the sensor device. Since the molecules or clusters of the analyte cannot penetrate the device, their centers are kept at a minimum distance determined by their radius. Therefore, the sensor capacitance is mainly influenced by the small-size analytes if operated in normal configuration, i.e. with small the extension of the field lines. In the alternative configuration shown in Fig. 10b, the extension of the field lines is large and small and large analytes are sensed to similar extent.

Another possibility using structures with different receptors at different distances from the surface is shown in Figs. 11a and 11b (not claimed). The "close" receptors 22 near the surface can preferably react with one species, and receptors 21 at larger distance might react with another analyte species. These species may be or may include chemical molecules, macromolecules, proteins, cells, or macroscopic particles in the gas, liquid or solid phase. The sensed area of the capacitor can be varied by applying different electrode configurations as shown in Figs. 11a and 11b.

Another exemplary application is based on the accumulation of the analytes in different distances to the sensor device surface. This can be done by a stack of sensitive layers 23 to 26 as shown in Fig. 12 (not claimed) in various situations. Each of the various layers 23 to 26 accumulates a given analyte to a different extent.

Varying the extension of the electric field lines can also be used to analyze different layers on or regions above an electrode structure, as shown in Fig. 12. To give a macroscopic example with a relatively large time scale, the constitution of a snow cover, consisting of layers of snow of different densities, can be monitored in a remote area over a full winter season.

## Claims

1. A capacitive sensor with a plurality of electrodes, comprising
an electrically configurable electrode arrangement with more than two electrically separated electrode groups (3,4,5), each group (3,4,5) consisting of one or more electrodes, such that, depending on the electrical configuration, different electrical fields are generated,
further including one or more switches to alternate between at least two different electrical configurations of the electrode arrangement resulting in at least two different distributions of the generated electrical field,
wherein circuitry is provided, connected to the switches, adapted to address and switch between the-different configurations,
further including a cover layer (2) of a sensitive material on top of the electrodes affecting a capacitance of the sensor by changes in its dielectric properties upon exposure to an analyte,
wherein a first group of electrodes is arranged at a first plane, and a second group of electrodes is arranged in a second plane above the first plane.

2. The capacitive sensor according to claim 1, wherein each electrode group (3,4,5) is connectable to the associated circuitry for generating a desired electrical field.

3. The capacitive sensor according to any preceding claim, wherein each electrode group (3,4,5) is connectable to associated circuitry.

4. Use of the capacitive sensor according to any one of the preceding claims, wherein in at least one of the configurations one electrode group (3,4,5) remains unconnected or floating.

5. Use of the capacitive sensor according to any of the claims 1 to 3, wherein in at least one of the configurations one electrode group (3,4,5) is grounded.

6. The capacitive sensor according to claim 1, wherein electrodes of different electrode groups (3,4,5) are interdigitated.

7. The capacitive sensor according to any of the preceding claims, wherein the electrodes or groups of electrodes (3,4,5) are located on a heatable area, preferably on a micromachined membrane with an integrated heater.

8. The capacitive sensor according to claim 7, further including
a temperature sensor for measuring a temperature of the electrode arrangement.

9. The capacitive sensor according to any of the preceding claims, wherein the cover layer (2) is a polymer layer.

10. Use of the capacitive sensor according to any of the preceding claims 1-3, 6-9 as capacitive-type chemical or humidity sensor.

11. Use of the capacitive sensor according to any of the preceding claims 1-3, 6-9 as capacity-type bio-sensor, preferably for an analyte in a liquid phase.

12. An integrated sensor array comprising a plurality of the capacitive sensors according to one or more of the claims 1 to 9.

13. The sensor array according to claim 12, further comprising
at least one multiplexer, preferably integrated into said sensor array.

14. A sensor system, comprising
a capacitive sensor according to one or more of the claims 1 to 9,
signal conditioning means for driving at least one of the electrodes or groups of electrodes (3,4,5) to generate the distributions of the electrical field, and
read-out means for receiving and/or evaluating signals of said sensor.

15. A sensor system, comprising
a capacitive sensor array according to claim 12 or 13,
signal conditioning means for driving at least one of the electrodes or groups of electrodes (3,4,5) of at least one sensor in said array to generate the different distributions of the electrical field, and
read-out means for receiving and/or evaluating signals of at least one sensor in said array.

16. The sensor system according to claim 14 or 15, wherein the read-out means is or comprises a delta-sigma modulator.

17. The sensor system according to claim 14 or 15, wherein the read-out means allows for a differential measurement between different electrode configurations.

18. The sensor system according to claim 14 or 15, further comprising means for reading-out and/or controlling a membrane temperature.

19. Use of a capacitive sensor according to any of the claims 1-3, 6-9 or a sensor system according to any of the claims 14 to 18, **characterized in that** the sensor is adapted to an analyte in its gaseous phase and/or its liquid phase and/or its solid phase.

## Patentansprüche

1. Ein kapazitiver Sensor mit einer Vielzahl von Elektroden, umfassend
eine elektrisch konfigurierbare Elektrodenanordnung mit mehr als zwei elektrisch getrennten Elektrodengruppen (3, 4, 5), wobei jede Gruppe (3, 4, 5) aus einer oder mehreren Elektroden besteht, derart, dass abhängig von der elektrischen Konfiguration unterschiedliche elektrische Felder erzeugt werden,
weiter enthaltend einen oder mehrere Schalter um zwischen mindestens zwei unterschiedlichen elektrischen Konfigurationen der Elektrodenanordnung umzuschalten, was zumindest zwei unterschiedliche Verteilungen des erzeugten elektrischen Feldes ergibt,
wobei Schaltkreise, die an den Schaltern angeschlossen und zur Adressierung und zum Umschalten zwischen den unterschiedlichen Konfigurationen ausgestaltet sind, bereitgestellt werden,
weiter enthaltend eine Deckschicht (2) eines empfindlichen Materials auf den Elektroden, die eine Kapazität des Sensors aufgrund von Änderungen in ihren dielektrischen Eigenschaften bei Einwirkung eines Analyts beeinflusst,
wobei eine erste Elektrodengruppe in einer ersten Ebene und eine zweite Elektrodengruppe in einer zweiten Ebene über der ersten Ebene angeordnet ist.

2. Der kapazitive Sensor nach Anspruch 1, wobei jede Elektrodengruppe (3, 4, 5) zur Erzeugung eines gewünschten elektrischen Feldes an die zugeordneten Schaltkreise anschliessbar ist.

3. Der kapazitive Sensor nach einem der vorangehenden Ansprüche, wobei jede Elektrodengruppe (3, 4, 5) an zugeordnete Schaltkreise anschliessbar ist.

4. Verwendung des kapazitiven Sensors nach einem der vorangehenden Ansprüche, wobei eine Elektrodengruppe (3, 4, 5) in mindestens einer der Konfigurationen nicht angeschlossen oder schwebend bleibt.

5. Verwendung des kapazitiven Sensors nach einem der Ansprüche 1 bis 3, wobei eine Elektrodengruppe (3, 4, 5) in mindestens einer der Konfigurationen geerdet ist.

6. Der kapazitive Sensor nach Anspruch 1, wobei Elektroden unterschiedlicher Elektrodengruppen (3, 4, 5) ineinandergreifen.

7. Der kapazitive Sensor nach einem der vorangehenden Ansprüche, wobei die Elektroden oder Elektrodengruppen (3, 4, 5) auf einer beheizbaren Fläche, insbesondere auf einer mikrotechnisch hergestellten Membran mit einer integrierten Heizvorrichtung, angeordnet sind.

8. Der kapazitive Sensor nach Anspruch 7, weiter umfassend
einen Temperatursensor zur Messung einer Temperatur der Elektrodenanordnung.

9. Der kapazitive Sensor nach einem der vorangehenden Ansprüche, wobei die Deckschicht (2) eine Polymerschicht ist.

10. Verwendung des kapazitiven Sensors nach einem der vorangehenden Ansprüche 1-3, 6-9 als kapazitiver, chemischer Sensor oder Feuchtigkeitssensor.

11. Verwendung des kapazitiven Sensors nach einem der vorangehenden Ansprüche 1-3, 6-9, als kapazitiver Bio-Sensor, insbesondere für einen Analyt in einer flüssigen Phase.

12. Ein integriertes Sensor-Array umfassend eine Vielzahl von kapazitiven Sensoren nach einem oder mehreren der Ansprüche 1 bis 9.

13. Das Sensor-Array nach Anspruch 12, weiter umfassend mindestens einen Multiplexer, insbesondere im Sensor-Array integriert.

14. Ein Sensorsystem, umfassend einen kapazitiven Sensor nach einem oder mehreren der Ansprüche 1 bis 9,
Signalaufbereitungsmittel zur Ansteuerung mindestens einer der Elektroden oder Elektrodengruppen (3, 4, 5) zur Erzeugung der Verteilungen des elektrischen Feldes, und
Auslesemittel zum Empfang und/oder zur Auswertung von Signalen des Sensors.

15. Ein Sensorsystem, umfassend
ein kapazitives Sensor-Array nach Anspruch 12 oder 13,
Signalaufbereitungsmittel zur Ansteuerung mindestens einer der Elektroden oder Elektrodengruppen (3, 4, 5) im Array, zur Erzeugung der unterschiedlichen Verteilungen des elektrischen Feldes, und
Auslesemittel zum Empfang und/oder zur Auswertung mindestens eines Sensors im Array.

16. Das Sensorsystem nach Anspruch 14 oder 15, wobei das Auslesemittel ein Delta-Sigma-Modulator ist oder einen Delta-Sigma-Modulator umfasst.

17. Das Sensorsystem nach Anspruch 14 oder 15, wobei das Auslesemittel eine differentielle Messung zwischen unterschiedlichen Elektrodenkonfigurationen erlaubt.

18. Das Sensorsystem nach Anspruch 14 oder 15, weiter umfassend Mittel zum Auslesen und/oder Steuern einer Membrantemperatur.

19. Verwendung eines kapazitiven Sensors nach einem der Ansprüche 1-3, 6-9 oder eines Sensorsystems nach einem der Ansprüche 14-18, **dadurch gekennzeichnet, dass** der Sensor für einen Analyt in seiner Gasphase und/oder seiner flüssigen Phase und/oder seiner festen Phase angepasst ist.

## Revendications

1. Un capteur capacitif avec une pluralité d'électrodes, comprenant
un arrangement d'électrodes électriquement configurable avec plus de deux groupes d'électrodes (3, 4, 5) électriquement séparés, chaque groupe (3, 4, 5) consistant en une ou plusieurs électrodes, de sorte que des différents champs électriques soient générés dépendant de la configuration électrique,
contenant en outre un ou plusieurs commutateurs afin d'alterner entre au moins deux configurations électriques différentes de l'arrangement d'électrodes, résultant en au moins deux distributions différentes du champs électrique généré,
des circuits électriques étant prévus, connectés au commutateurs, et adaptés à adresser et commuter entre les différentes configurations,
contenant en outre une couche de couverture (2) d'un matériau sensible sur les électrodes, affectant une capacité du capteur par des changements dans ses caractéristiques diélectriques après l'influence d'un analyte,
un premier groupe d'électrodes étant arrangé dans un premier plan, et un deuxième groupe d'électrodes étant arrangé dans un deuxième plan au dessus du premier plan.

2. Le capteur capacitif selon la revendication 1, chaque groupe d'électrodes (3, 4, 5) étant connectable avec les circuits électriques associés, afin de générer un champs électrique souhaité.

3. Le capteur capacitif selon l'une des revendications précédentes, chaque groupe d'électrodes (3, 4, 5) étant connectable avec des circuits électriques associés.

4. Usage du capteur capacitif selon l'une des revendications précédentes, un groupe d'électrodes (3, 4, 5) restant déconnecté ou flottant dans au moins une des configurations.

5. Usage du capteur capacitif selon l'une des revendications 1 à 3, un groupe d'électrodes (3, 4, 5) étant mis à terre dans au moins une des configurations.

6. Le capteur capacitif selon la revendication 1, des électrodes de différents groupes d'électrodes (3, 4, 5) étant engrenées.

7. Le capteur capacitif selon l'une des revendications précédentes, les électrodes ou groupes d'électrodes (3, 4, 5) étant situées ou situés sur une surface apte à être chauffée, particulièrement sur une membrane micro-usinée avec un chauffage intégré.

8. Le capteur capacitif selon la revendication 7, comprenant en outre
un capteur de température pour mesurer une température de l'arrangement d'électrodes.

9. Le capteur capacitif selon l'une des revendications précédentes, la couche de couverture (2) étant une couche polymère.

10. Usage du capteur capacitif selon l'une des revendications 1-3, 6-9, comme capteur capacitif chimique ou d'humidité.

11. Usage du capteur capacitif selon l'une des revendications 1-3, 6-9 comme capteur biologique capacitif, particulièrement pour un analyte dans une phase liquide.

12. Un réseau de capteurs intégré comprenant une pluralité de capteurs capacitifs selon l'une des revendications 1 à 9.

13. Le réseau de capteurs selon la revendication 12, comprenant en outre
au moins un multiplexeur, particulièrement intégré dans ledit réseau de capteurs.

14. Un système de capteurs, comprenant un capteur capacitif selon l'une ou plusieurs des revendications 1 à 9,
des moyens de conditionnement de signaux pour commander au moins une des électrodes ou au moins un des groupes d'électrodes (3, 4, 5) afin de générer les distributions du champs électrique, et
des moyens de lecture pour recevoir et/ou évaluer des signaux dudit capteur.

15. Un système de capteurs, comprenant
un capteur capacitif selon la revendication 12 ou 13,
des moyens de conditionnement de signaux pour commander au moins une des électrodes ou au moins un des groupes d'électrodes (3, 4, 5) d'au moins un capteur dans ledit réseau, afin de générer les distributions du champs électrique, et
des moyens de lecture pour recevoir et/ou évaluer des signaux d'au moins un capteur dans ledit réseau.

16. Le système de capteurs selon la revendication 14 ou 15, les moyens de lecture étant ou comprenant un modulateur sigma-delta.

17. Le système de capteurs selon la revendication 14 ou 15, les moyens de lecture permettant une mesure différentielle entre des configurations d'électrode différentes.

18. Le système de capteurs selon la revendication 14 ou 15, comprenant en outre des moyens pour lire et/ou commander une température de membrane.

19. Usage d'un capteur capacitif selon l'une des revendications 1-3, 6-9 ou d'un système de capteurs selon l'une des revendications 14 à 18, **caractérisé en ce que** le capteur est adapté à un analyte dans sa phase gazeuse et/ou dans sa phase liquide et/ou dans sa phase solide.
